(19) Europäisches Patentamt
European Patent Office
Office européen des brevets

(11) **EP 2 141 832 B1**

(12) **EUROPEAN PATENT SPECIFICATION**

(45) Date of publication and mention
of the grant of the patent:
**18.09.2013 Bulletin 2013/38**

(51) Int Cl.:
**H04B 10/071** (2013.01)

(21) Application number: **08104626.0**

(22) Date of filing: **03.07.2008**

(54) **Automatic topology discovery for passive optical networks**

Automatische Topologie-Erkennung für passive optische Netzwerke

Découverte topologique automatique pour réseaux optiques passifs

(84) Designated Contracting States:
**AT BE BG CH CY CZ DE DK EE ES FI FR GB GR
HR HU IE IS IT LI LT LU LV MC MT NL NO PL PT
RO SE SI SK TR**

(43) Date of publication of application:
**06.01.2010 Bulletin 2010/01**

(73) Proprietor: **Nokia Siemens Networks OY
02610 Espoo (FI)**

(72) Inventors:
• **Castro, Jorge
2795-093 Linda-a-Velha (PT)**
• **Freire, Mário Marques
6200-330 Covilha (PT)**
• **Hajduczenia, Marek
4505-314 Fiaes (PT)**
• **Inacio, Pedro
6200-230 Aldeia de Carvalho (PT)**

• **Meleiro, Rui
3500-393 Viseu (PT)**
• **Monteiro, Paulo Miguel
3930-209 Ilhavo (PT)**
• **Santos, Jose
1750-430 Lisboa (PT)**
• **Silva, Henrique Prof.
3030-076 Coimbra (PT)**

(74) Representative: **Bruglachner, Thomas E. et al
Nokia Siemens Networks Oy
COO RTP IPR / Patent Administration
80240 Munich (DE)**

(56) References cited:
**US-A- 6 028 661       US-A1- 2006 007 426
US-A1- 2008 031 624   US-B1- 6 396 575
US-B1- 6 512 610**

**Description**

Background of the Invention

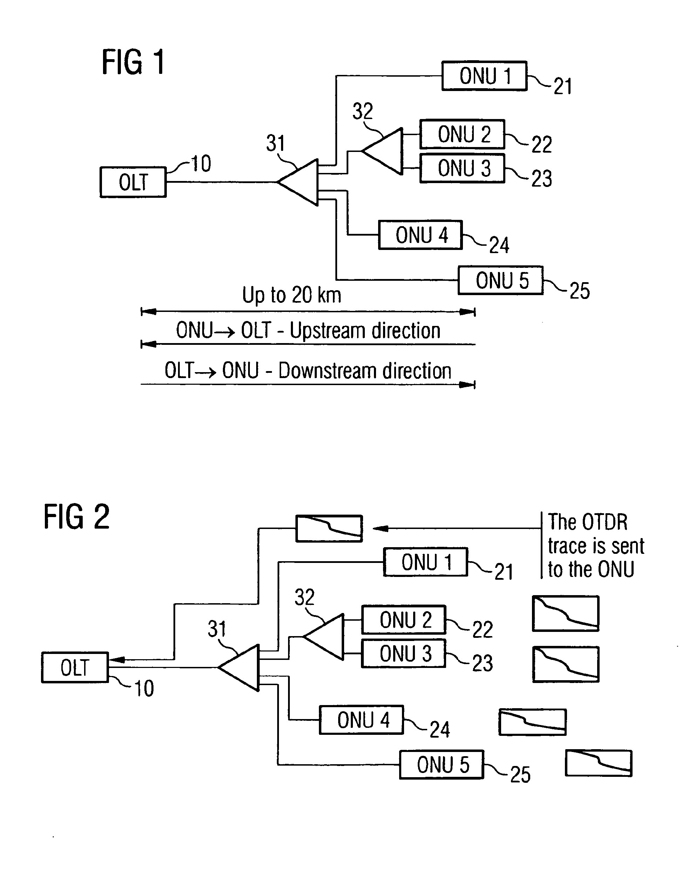

The present invention relates to the area of telecommunications, namely in the area of Passive Optical Networks (PONs), and presents a method and apparatus for automatically discovering a PON's network topology.
A PON is a low cost optical infrastructure for access networks which has been introduced to overcome the limitations of access technologies based on copper lines, namely the restricted bandwidth and short reach, at an acceptable cost. A PON system provides means to deliver triple play services over an optical network. In a PON only the endpoints of the communication are active while the actual network connecting them is passive. Usually, a single Optical Line Terminal (OLT) located inside a Central Office (CO) is connected to a plurality of Optical Network Units located at the end-users premises by means of one or more optical fibres. The PON system is active only at the edges of the structure (OLT and ONUs), meaning that optical splitters which are used to split the optical fibre coming from the OLT in order to provide the data signal to more than one ONU are simple passive devices placed between the OLT and the ONUs, dividing or coupling the optical signals they receive. A communication between the OLT and one of the ONUs is termed downstream transmission and the flow of information in the reverse direction is commonly termed upstream transmission.
Reducing the cost of the entire system comprises the use of one or more passive splitter combiners that physically (and passively) divide the optical signal coming from a single fibre into different optical paths in the downstream direction, and combines the signal coming from different optical fibres into a single fibre, in the upstream direction. Figure 1 depicts a possible arrangement of all the previously mentioned network elements in a so-called tree-and-branch topology where an OLT 10 is connected to ONUs 21 through 25 by means of fibre connections arranged in a tree where each branch is realised by a passive splitter 31, 32. The invention herein applies to this type of topology as well as to other not so-common types (as ring, tree and bus topologies). In the description below, any reference to this type of topology should be understood as being also applicable to any of the other types.
As the size and complexity of the networks in general and of the PON structures in particular increases, it becomes more difficult to create and maintain a map of the complete network structure including all connections between elements of the networks. In PONs, this task is presently performed recurring to hand made or computer inserted plans of the deployment of the networks. Adding a network element usually means going back to the drawing board or computer program and inserting the new object and all the associated parameters (distances and connections, for instance).
Nowadays, this task may not represent a heavy burden to the staff responsible for managing the PONs (a PON system contains a relatively small number of devices and the topology does not change frequently) . However, the proliferation of this technology and its common adoption as the first- mile access technology of choice, connected with the deployment of a larger number of ONUs (possibly over one hundred per PON) and the evolution of the technology towards the "buy it and do it yourself" tendency, will certainly render these systems more dynamic. Future adoption of the PON technology as an internal (private) plug and play network will also produce the aforementioned effect. Thus, the process of knowing what is connected to what can become rather complex and time consuming.
Thus, there is a need to remotely, automatically, and efficiently discover the network topology of a PON.

Summary of the Invention

To overcome the above-mentioned desire for efficient network topology discovery, a first aspect of the invention therefore provides a method of automated network topology discovery in passive optical networks in which an optical line terminal (OLT) is connected to a plurality of optical network units (ONUs) via a plurality of optical splitters, the method including for each of the ONUs:

- launching an optical pulse into the passive optical network;
- measuring power of reflected light; and
- transmitting measure data comprising a distance information about a distance of the ONU to one or more of the optical splitters to the OLT.

Preferably, the steps are performed sequentially for each ONU, however, other schemes are possible and can be easily devised. Furthermore, it is possible to perform the method only for a part of all ONUs in the PON, e.g. if the remaining ONUs do not support the method of the invention.
In a preferred embodiment, the method further comprises a step of detecting one or more inflection points in a trace of the measured reflected light. As will be pointed out later in more detail, inflection points in the trace of the measured reflected light are an indication of the presence of an optical splitter in the path of the optical pulse and thus can be used to determine the distance to the optical splitter due to the fixed relation between propagation time and distance.
At least a first one of the ONUs may carry out the step of detecting one or more inflection points and may then transmit an information about a position of the one or more inflection points within the trace to the OLT as the distance information. This embodiment has an advantage in that less data have to be transmitted from the first ONU to the OLT. The disadvantage is that the first ONU needs to be able to perform the required processing.

Therefore, at least a second one of the ONUs may transmit the trace as the distance information. The OLT then carries out the step of detecting the one or more inflection points and determining the position of the one or more inflection points within the trace. It is also possible to have mixed PONs wherein some ONUs perform the detection of the one or more inflection points locally and wherein others transmit the traces of the measured reflected light to the OLT for processing.

Preferably, the method further includes processing the positions of the one or more inflection points from each ONU and grouping ONUs having a first inflection point mutually in common into one or more respective groups. If several ONUs have the first inflection point in common, this is an indication that the ONUs are connected to the same optical splitter.

The method may further include subdividing the respective group or the respective groups of ONUs into one or more subgroups wherein all ONUs of the subgroup have the first and a respective second inflection point mutually in common.

Generally, the terms "first inflection point" and "second inflection point" should not be understood as referring to the inflection points in the trace of measure reflected light associated with the shortest distance in time from the launching of the light pulse and the next inflection point, respectively. Even though other grouping algorithms can be devised, some of which starting from the first inflection point with regard to the distance in time, it is advantageous to start with the inflection point in the trace being last with respect to time because this inflection point can be associated with the optical splitter closest to the OLT. If this inflection point is used as the first inflection point, the group of ONUs being connected to the optical splitter closest to the OLT, i.e. those ONUs having this first inflection point in common, will comprise subgroups of ONUs, each of the subgroups being connected to a respective one of one or more optical splitters connected to the optical splitter closest to the OLT.

Of course, error of measurement should be considered such that ONUs having an inflection point within a predetermined or selectable range from the inflection point of another ONU will be considered to have the inflection points in common.

In addition, the method may further include determining one or more respective insertion losses for each of the one or more inflection points and subdividing the one or more respective groups into one or more second subgroups, each of which having one of the one or more insertion losses mutually in common. As describes above, it is possible that more than one optical splitter are connected to a preceding optical splitter or to the OLT via fibres of the same length. In this case only relying on the positions of the corresponding inflection points could lead to two groups of ONUs being grouped into one group connected to a single optical splitter. Since different optical splitter will usually cause different insertion losses, i.e. different heights of the drops in the trace of back-scattered light, the optical splitters can be differentiated from each other and thus the two different groups of ONUs be detected correctly during the network topology discovery.

Preferably, the method further includes detecting one or more spikes in the trace of the measured reflected light. Such spikes are an indication of a connector used for linking sections of optical fibres together. If, for instance, two ONUs have such a spike in common, this increases the probability of correct network topology detection because theoretically it would be possible to have two optical splitters being connected to a common preceding optical splitter via fibres of the same length such that the inflection points of two groups of ONUs, each of which being connected to a respective one of the two optical splitters, could be considered to match leading to the ONUs being grouped in one single group. Thus, a spike can be used as an additional indication whether two ONUs belong to the same group of ONUs and thus are connected to the same optical splitter or not.

As before, the first one of the ONUs may carry out the detecting of the one or more spikes and may transmit an information about a position of the one or more spikes to the OLT together with the distance information. The same considerations with regard to the amount of transmitted data and processing requirements in the ONU apply as before.

Preferably, the method further includes, at the OLT, calibrating the position of the one or more inflection points of the plurality of ONUs relatively to the position of a last spike among the one or more spikes. The last spike can be associated to the OLT itself, i.e. the last spike represents the portion of the launched optical pulse that gets reflected at the receiver in the OLT. Since such a spike can be expected in all traces, it is advantageous to refer all positions of inflection points and spikes to the position of the last spike such that those positions will be calibrated from one trace to the others.

Preferably, each of the ONUs performs the launching, measuring, and transmitting in response to a request from the OLT. This way the network topology discovery can be performed when required. Of course, it would also be possible to perform the network topology discovery periodically or according to any suitable schedule such that no request from the OLT would be required.

The optical pulse may comprise light having a wavelength used for data transmission in the passive optical network and wherein the steps of launching and measuring are carried out at a time where no ONU transmits data. Alternatively, the optical pulse may not comprise light having a wavelength used for data transmission in the passive optical network. Then, the steps of launching and measuring may be carried out at a time where one ONU transmits data. If light of the wavelength used for data transmission is used, no other ONU may transmit data while the measurement is carried out. This means that the overall throughput of the network will decrease. On the other hand, no additional hardware will be required for this solution. On the other hand, if light of a different wavelength is used (and thus additional hardware including filters), the network topology discovery can even be carried out while one of the ONUs transmits data.

A second aspect of the invention provides an optical line terminal (OLT) for use in passive optical networks in which the OLT is connected to a plurality of optical network units (ONUs) via a plurality of optical splitters. The OLT is adapted to receive data from the ONUs, the data comprising a distance information about a distance of the respective ONU to one or more of the optical splitters, to detect one or more inflection points in a trace of measured reflected light, the trace being the distance information, or alternatively to retrieve an information about a position of the one or more inflection points within the trace, the information about the position being the distance information, and to process the positions of the one or more inflection points from each ONU and grouping ONUs having a first inflection point mutually in common into one or more respective groups. As already stated above, the OLT may either receive traces of measured reflected light from the ONUs or some ONUs and process the measure data or the ONUs or some ONUs may already perform the processing and transmit the result of the processing to the OLT. Accordingly, the OLT can be adapted to only support one of the two possibilities or both.

The OLT may be further adapted to subdivide the respective group or the respective groups of ONUs into one or more subgroups wherein all ONUs of the respective subgroup have the first and a respective second inflection point mutually in common.

The OLT may be further adapted to detect one or more spikes in the trace of the measured reflected light.

Preferably, the OLT is further adapted to calibrate the position of the one or more inflection points of the plurality of ONUs relatively to the position of a last spike among the one or more spikes.

A third aspect of the invention provides an optical network unit (ONU) for use in passive optical networks in which an optical line terminal (OLT) is connected to a plurality of ONUs via a plurality of optical splitters. The ONU is adapted to launch an optical pulse into a passive optical network, to measure power of reflected light and to transmit measure data comprising a distance information about a distance of the ONU to one or more of the optical splitters to the OLT.

Preferably, the ONU is further adapted to detect one or more inflection points in a trace of the measured reflected light and to transmit an information about a position of the one or more inflection points within the trace to the OLT as the distance information.

The ONU may be further adapted to detect one or more spikes in the trace of the measured reflected light and to transmit an information about a position of the one or more spikes to the OLT together with the distance information.

The ONU may be adapted to launch the optical pulse into the passive optical network, to measure the power of the reflected light and to transmit the measure data comprising a distance information about the distance of the ONU to one or more of the optical splitters to the OLT in response to a request received from the OLT.

The invention includes the insight that during normal operation of a PON, it is not possible for the OLT alone to distinguish exactly which ONU is connected to which splitter but can be easily assessed from the ONU side, providing that it is equipped with the appropriate tools to do so.

The invention proposes the use of an Optical Time Domain Reflectometer (OTDR) to solve the above-mentioned shortcomings of the prior art. The OTDR is an optical device that is used to characterise an optical fibre. The OTDR launches optical pulses into the fibre under test and integrates the optical power that is reflected and back-scattered in the fibre over time. The time is converted to distance through the speed of light in the fibre, and the OTDR plots the reflected optical power against distance. The resulting OTDR trace can then be used to estimate the fibre attenuation, the losses from connector and splices, or to locate fibre faults. The OTDR also allows for determining the distance from the OTDR to splitters/combiners.

The OTDR has been used for locating faults in the fibre plant or to characterise the fibre attenuation when the fibre is deployed. In this case, the OTDR trace is acquired by a portable device when the fibre is installed.

It has been proposed that an OTDR could be included in the OLT for periodic fibre inspection. However, due to the splitters deployed between the OLT and the ONUs, it remains impossible to gather useful information from the fibre between the splitters and the ONUs, since multiple reflections from different fibres are measured in the OTDR. Some techniques have been used to enable fault location in the fibre plant. It has been proposed that mirrors could be employed at the end of each fibre so that a reference pulse could be obtained for each fibre path and therefore fibre faults could be tracked by monitoring changes of the optical power in the reference pulses. Alternatively, it has been proposed that each fibre might be tested using two reference pulses, spaced by a previously known interval. However, neither of these techniques is able to discover the network topology, since they can only find changes in the loss factor of each path.

One other technique involves the use of an additional dedicated switch for the OTDR signal at each splitter. Obviously, this architecture increases the complexity of the splitters used and therefore it is not compatible with previous installations. In addition, this solution requires the optical switches in the splitters to be powered, rendering the technology unsuitable for complete systems which are natively defined as passive.

According to the invention, the central element of the network (the OLT) may request discovery of the network topology. In order to do so, the OLT sequentially requests each ONU to perform an OTDR trace. The traces cannot be performed simultaneously if all OTDRs use the same wavelength because light reflected during the OTDR procedure of one ONU can interfere with other ONUs doing the OTDR trace. On the other hand, it is also possible to perform more than one OTDR trace at a time provided that each OTDR trace is done at a different wavelength and suitable filtering is used.

In addition, it is possible that all ONUs perform a measurement of reflected light while only one ONU launches an optical pulse into the PON. If this procedure is repeated such that each ONU has launched an optical pulse at least once, the additional information gathered from the measurements at ONUs which had not launched an optical pulse can be advantageously used in the network topology discovery. Only an ONU sharing part of the transmission path to the OLT with the ONU launching an optical pulse into the PON may receive reflected light. Thus, if the trace of an ONU not having launched an optical pulse into the PON shows measured reflected light in some parts of the trace, it is clear that the two ONUs belong to a group or subgroup. The downside of this approach is that the concurrent measurement performed at the ONUs must be synchronised which increases complexity and the amount of data that has to be processed grows with the square of the number of ONUs present in the PON which is a disadvantage especially in large networks.

The wavelength the OTDR should use may be chosen with regard to the actual implementation. However, the most cost effective solution can be used if the same wavelength is used as for the normal data transmission. The drawback of such an option is that a time slot must be allocated by the network to perform the OTDR during which no data transmission can be performed and thus reduces the amount of data transmission bandwidth. Alternatively, assignment of a dedicated wavelength in the band to the OTDR can be used to avoid affecting the data transmission bandwidth.

The closest state of the art may be found in the document US 2006/007426 A1 (WELLER WHITNEY T [US]). It discloses a method and apparatus for in-service testing of PON and FTTP networks comparing baseline test results recorded at a time during plant certification and current test results.

Brief Description of the Drawings

Figure 1 represents a classic tree-and-branch PON topology with the most common network elements concisely indicated. The common terminology for the flow directions is also specified.

Figure 2 depicts the transmission of the trace analysis to the OLT made by one of the ONUs of the system.

Figure 3 schematises the OTDR process each ONU performs separately in time in order to get the information regarding its own placement on the PON system.

Figure 4 illustrates the evaluation of the trace data at the OLT in order to construct a network plan.

Figure 5 presents a flow chart of an embodiment of the process done at the OLT level to obtain the network topology from the individual OTDR traces.

Figure 6 is a conceptual scheme of an embodiment of an ONU according to the invention, detailing a separate OTDR module, which operates in a different wavelength of the data wavelengths.

Figure 7 is a conceptual scheme of a second embodiment of an ONU in which the OTDR functionality is performed by the transmitter of the ONU.

Detailed Description of the Drawings

Figure 1 represents a classic tree-and-branch PON topology with the most common network elements concisely indicated. In the example of Fig. 1 ONUs 1 through 5 placed near the end-user premises are connected via optical splitters (or combiners in the upstream direction) represented by triangles to a single OLT 10 located inside a Central Office at a remote location. A first optical splitter 31 connects ONUs 1, 4, and 5 (reference signs 21, 24, and 25) together with a second splitter 32 to the OLT 10. ONUs 2 and 3 (reference numerals 22 and 23) connect to the PON by means of the second splitter 32. In a real PON dozens or even hundreds of ONUs can be connected to a single OLT. The ONUs can be distanced up to 20 kilometres from the OLT. As indicated in Fig. 1, the direction of data transmission from the ONUs to the OLT is commonly designated as being the "upstream direction" and the direction of data transmission from the OLT to the ONUs is termed the "downstream direction".

Figure 2 depicts the transmission of the trace analysis to the OLT made by one of the ONUs of the system. When a given ONU finishes the OTDR trace, it sends the OTDR information via an appropriate protocol to the OLT, in such a way that the OLT knows from which ONU the OTDR information comes from.

The OTDR information that needs to be sent to the OLT can either be the OTDR trace or the OTDR trace analysis, containing information on the splitter positions. Then again, there is a trade-off between the amount of information a given ONU has to transmit and the amount of information it has to process. The bandwidth allocated to transfer the OTDR information can be reduced (compared to the bandwidth required to transfer the whole OTDR trace) if only the splitter locations are sent, but it requires processing to be done at the ONU side.

During the whole network topology discovery procedure, the OLT gathers the OTDR information from all ONUs. Once one of the connected ONUs sends its OTDR trace (regardless of the actual transmission form, data compression, format, etc.) to the OLT, the central node processes the obtained data and draws conclusions. The analysis focuses on determining the positions of each splitter between each ONU and the OLT. The splitter position is distinguished by a noticeable drop in the back-scattered power observed in the OTDR trace received by each ONU. The position of such a drop can be determined by referring to the point with the largest negative slope which is usually referred to as an inflection point. Alternatively, the vertical or horizontal centre of a part of the trace having a slope lower than a predetermined negative threshold value can be used for determining the position of the drop within the trace. The skilled person will be able to derive other ways of determining points describing the position of a power drop within the trace all of which should be considered to form part of the term "inflection point" used in this document.

Apart from the power drops, a power spike may be observed when connectors are used to link individual fibre sections together (instead of fusion splices, which are more expensive to make and more difficult to process under field conditions). At the end of the OTDR trace, a strong spike resulting from the reflection at the OLT should equally be noticeable. All splitter positions should be measured relatively to this last spike. All OTDR traces contain the reflection spike related to the OLT and the back-scattered power drop due to the first splitter, which directly or indirectly connects all ONUs.

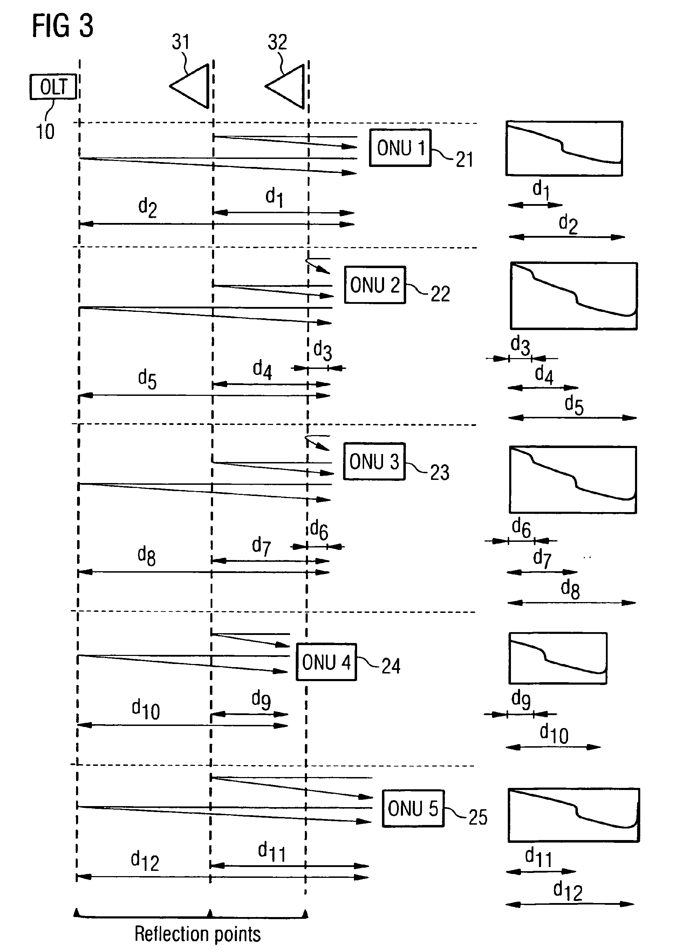

Figure 3 schematises the OTDR process each ONU performs separately in time in order to get the information regarding its own placement on the PON system. The position of the inflection points (usually the centres of the power drops in the trace of the reflected light) and of the spike caused be reflection at the OLT are emphasised in the figure. Due to the constant speed of light, propagation times in the fibre can be directly converted to distance information. Accordingly, the delays $d_1$ through $d_{12}$ in Fig. 3 allow determining distances of the respective ONU to the various optical splitters in the transmission path and to the OLT. It is very likely that ONUs showing a power drop at the same or very similar position in the trace are connected to the same optical splitter causing the power drop.

The measured distance from the OLT to the first splitter can be used to calibrate all the OTDR traces. As an example, the distances given by (1), (2), (3), (4) and (5) should all be the Same:

$$d_2 - d_1, \qquad\qquad (1)$$

$$d_5 - d_4, \qquad\qquad (2)$$

$$d_8 - d_7, \qquad\qquad (3)$$

$$d_{10} - d_9, \qquad\qquad (4)$$

$$d_{12} - d_{11}. \qquad\qquad (5)$$

The calibration process can include scaling the traces or positions of inflection points such that deviations of the abscissae due to slightly differing clocks in the OTDRs of the different ONUs can be accounted for. As illustrated by the above formulae, it is best to base the assessment on differences between neighbouring drops in the trace instead of on absolute positions.

Some OTDR traces will not have any other reflected power drop, like the OTDR traces of ONUs 1, 4 and 5, meaning that these ONUs are connected directly to the first splitter.

For the OTDR traces that have more back-scattered power drops, the positions of these drops can be compared to draw additional conclusions about the network topology. If the back-scattered power drops occur at the same distance from the OLT for a group of ONUs, it means that all the ONUs of that group are connected to the same second stage splitter (which in the example is the case of the ONUs 3 and 4).

If, in a different set of OTDR traces, another back-scattered power drop is observed at the same distance from the OLT, it means that there is a second group of ONUs that are connected to another second stage splitter. If a third OTDR trace drop is observed, a third stage splitter is present, and so on. If the OTDR traces of a group of ONUs show a third drop at the same distance from the OLT, then they are all connected to the same third stage splitter. This process should be repeated until all OTDR trace drops are analysed.

Additional certainty of the connection of a group of ONUs to a given splitter can be attained by comparing the back-scattered power drops caused by the splitters insertion losses. ONUs indirectly connected to the same splitter port should measure the same insertion loss in addition to the same splitter position. Moreover, in the case that the splitters used in the network equally distribute the optical power by all output ports, more information can be drawn from the measured splitter insertion loss, as the splitter port count, for instance. Hence, different splitters with different port counts can be distinguished and a more informative network topology (technical) schematic can be obtained. Concerning the cases where the splitters do not equally split the optical power, and assuming that the unequal splitting ratio is previously known, it is possible to distinguish which ONU is connected to which splitter port or group of ports having the same attenuation.

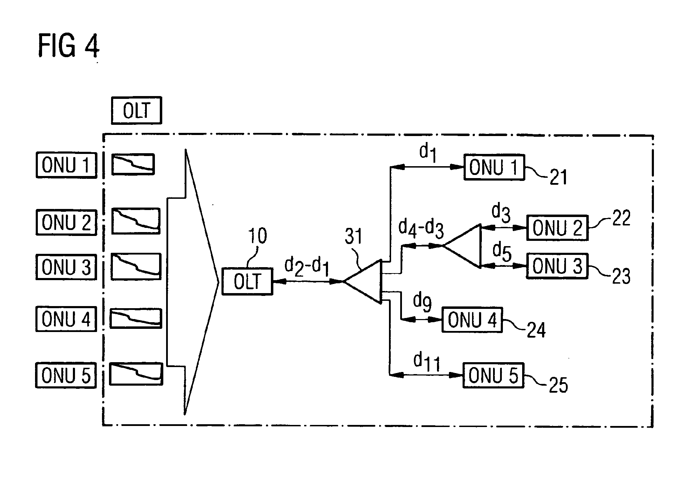

At this point, the OLT knows which ONU is connected to which splitter and is able to automatically draw network topology schematics, without human intervention. This process is summarily represented in Fig. 4. Once the OLT receives all the information concerning OTDR measures made by the ONUs, it correlates them and draws a possible topology of the network. Of course, this plan can only approximate reality, as the exact coordinates of the ONUs cannot be known by using this kind of procedures.

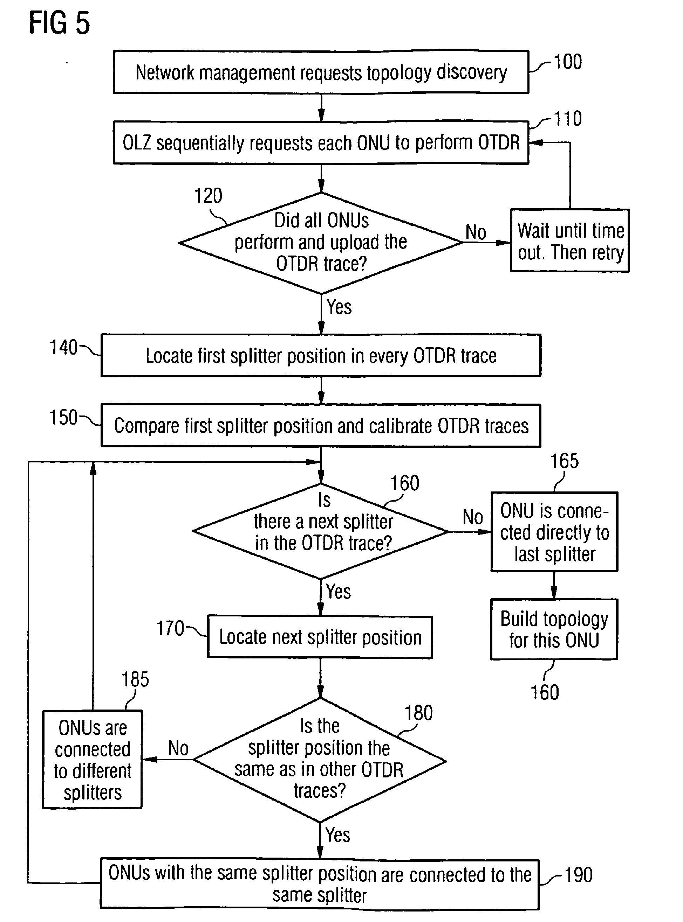

For a better understanding of the automatic discovery of the PON topology via OTDR analysis, a flow chart summarizing and complementing the previous explanation is presented in Figure 5.

In the example of Fig. 5, the automatic network topology discovery is started by request from the network management in step 100. In response to the request, the OLT sequentially requests each ONU to perform an OTDR. Step 110 is repeated until there are no more ONUs that haven't performed and uploaded the OTDR trace (or the required information extracted from the OTDR trace). The example of Fig. 5 uses a timeout-retry mechanism that repeats the request to each ONU until a response has been received (steps 120, 130 which branch back to step 110). Of course, it is also possible to implement a maximum retry counter and similar polling schemes. Once it has been determined that each ONU has performed and uploaded the OTDR trace, in step 140 the position of the first splitter in the PON (seen from the OLT) is determined in every OTDR trace. In step 150 the positions of the first splitter are compared and the OTDR traces are calibrated as explained above. The procedure continues in step 160 where it is determined whether there is an indication of another (next) splitter in the OTDR trace. If the answer is negative, it is decided that the ONU whose OTDR trace is being processed is directly connected to the last splitter where "last" refers to the preceding splitter that was determined last while processing the current OTDR trace (step 165). In step 169 the topology for the current ONU is built.

If in step 160 the answer was positive, the next splitter position is determined in step 170. Then, the position of this next splitter is compared to the positions of other splitters found in the OTDR traces that already have been processed (step 180). If not, it is decided that the present ONU is connected via a different splitter that has not yet been detected (step 185) and the procedure continues by branching back to step 160 looking for further indications of splitters in the current OTDR trace. In step 185 a new group or subgroup may be opened whereto other ONUs may be added during the remaining procedure. If the reply in step 180 is in the affirmative, it is determined in step 190 that the current ONU is connected to the same splitter as the other ONU or other ONUs found in step 180, the current ONU is added to the subgroup to which the other ONU or other ONUs belong, and the procedure continues in step 160 until all OTDR traces have been processed and the complete network topology has been built .

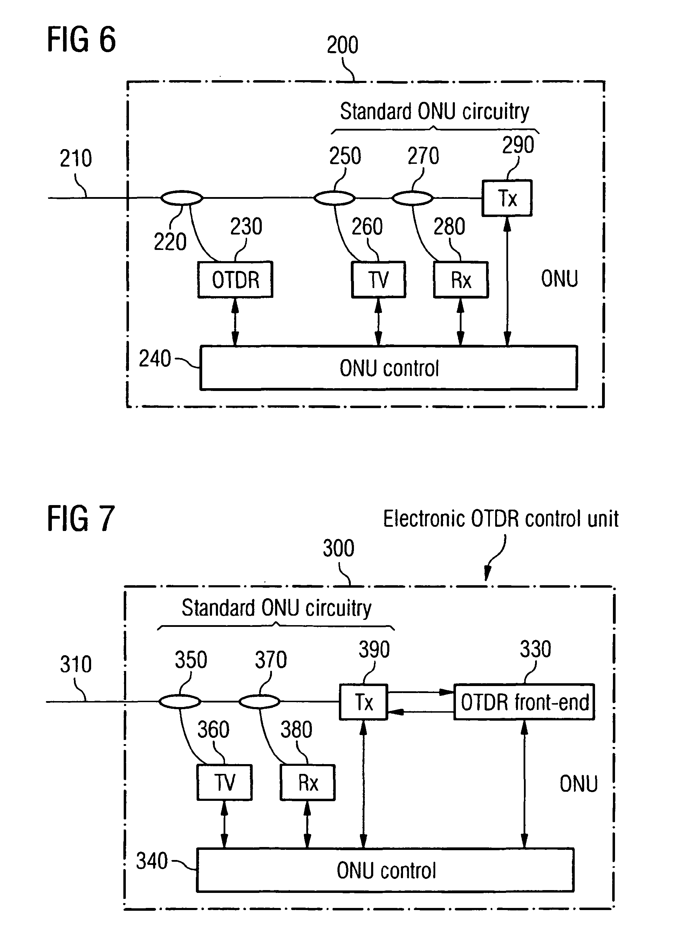

As explained herein in detail, by adding a small, cheap, and easy to integrate, OTDR module at the ONUs, one can get the most precise view of the passive structure of the PON. Additionally, it should be equally possible to isolate minor flaws of the optical fibre or connectors, such as, for instance, fibre bends near ONUs. Turning now to Figs. 6 and 7, two approaches can be followed regarding the physical implementation of the invention compliant ONU:

The first is to use a separate OTDR module 230 whose optical components are separate and independent from the ONU 200. In this case, the ONU 200 itself controls the OTDR module 230 which can be seen as a sub-system of the ONU 200. By these means, the OTDR 230 operates in a different wavelength than that of the data signals and the OTDR pulses are inserted into the fibre 210 by the means of an additional wavelength division multiplexing (WDM) coupler 220. Figure 7 schematises an ONU 200 using this approach. As mentioned before, since the wavelength of the OTDR is not the same as used for data transmission, the OTDR trace can be acquired independently of the data transmission. It must be noted, however, that only one ONU 200 may launch optical pulses at the same time. In Figs. 6 and 7, blocks 260 and 360, respectively, stand for opto-electronic modules that establish communications for television channels which can be transmitted over the PON.

An alternative approach to implement the OTDR functionality in the ONU is to exploit the ONU optical components as shown in Fig. 7. In this approach, the OTDR is no longer a separate sub-system of the ONU 300. Instead, it makes use of the ONU's transmitter 390 for launching optical pulses into optical fibre 310. In order to measure the reflected pulses, the ONU 300 uses the transmitter monitor photodiode or, if not present, an additional photodiode. The optical components are driven by an OTDR electronic front-end 330. Since this approach makes use of the optical components of the ONU 300, it provides for a more cost effective solution. Nevertheless, this approach assumes the OTDR measurement to be done at the wavelength of the upstream data, and may require allocation of some bandwidth to accomplish the purpose of making the measurements. Some recent developments concern a technique that allows an OTDR trace to be acquired without interrupting the data transmission, at the expense of increased processing of the measured backscattered data. This approach described in detail in B. De Mulder, W. Chen, J. Bauwelinck, J. Vandewege, X. Z. Qiu, Nonintrusive Fiber Monitoring of TDM Optical Networks, Journal of Lightwave Technology, Vol. 25, No. 1, 2007, could be used advantageously in the ONU of the invention.

Reference List

| 10 | Optical Line Terminal (OLT) |
|---|---|
| 21, 22, 23, 24, 25 | Optical Network Unit (ONU) |
| 200, 300 | Optical Network Unit (ONU) |
| 31, 32 | Optical Splitter/Combiner |
| 210, 310 | Optical Fibre |
| 220, 250, 270 | Wavelength Division Multiplexing Coupler |
| 350, 370 | Wavelength Division Multiplexing Coupler |
| 230 | Optical Time Domain Reflectometer (OTDR) |
| 330 OTDR | electronic front-end |
| 240, 340 | ONU control |
| 260, 360 | TV module |
| 280, 380 | Optical Receiver (Rx) |
| 290, 390 Optical | Transmitter (Tx) |

**Claims**

1.   A method of automated network topology discovery in passive optical networks in which an optical line terminal (OLT, 10) is connected to a plurality of optical network units (ONUs, 21 to 25) via a plurality of optical splitters, the method including for each of the ONUs:

- launching an optical pulse into the passive optical network;
- measuring power of reflected light; and
- transmitting measure data comprising a distance information about a distance of the ONU to one or more of the optical splitters (31, 32) to the OLT.

2.   The method of claim 1, further comprising a step of detecting one or more inflection points in a trace of the measured reflected light.

3.   The method of claim 2, wherein at least a first one of the ONUs (21 to 25) carries out the step of detecting one or more inflection points and transmits an information about a position of the one or more inflection points within the trace to the OLT (10) as the distance information.

4. The method of claims 2 or 3, wherein at least a second one of the ONUs (21 to 25) transmits the trace as the distance information and wherein the OLT (10) carries out the step of detecting the one or more inflection points and determining the position of the one or more inflection points within the trace.

5. The method of one of the claims 3 or 4, further including processing the positions of the one or more inflection points from each ONU (21 to 25) and grouping ONUs having a first inflection point mutually in common into one or more respective groups.

6. The method of claim 5, further including subdividing the respective group or the respective groups of ONUs (21 to 25) into one or more first subgroups wherein all ONUs of the subgroup have the first and a respective second inflection point mutually in common.

7. The method of one of the claims 5 or 6, further including determining one or more respective insertion losses for each of the one or more inflection points and subdividing the one or more respective groups into one or more second subgroups, each of which having one of the one or more insertion losses mutually in common.

8. The method of one of the claims 2 through 7, further including detecting one or more spikes in the trace of the measured reflected light.

9. The method of claim 8, wherein the first one of the ONUs (21 to 25) carries out the detecting of the one or more spikes and transmits an information about a position of the one or more spikes to the OLT (10) together with the distance information.

10. The method of one of the claims 8 or 9, further including, at the OLT (10), calibrating the position of the one or more inflection points of the plurality of ONUs (21 to 25) relatively to the position of a last spike among the one or more spikes.

11. The method of one of the preceding claims, wherein each of the ONUs (21 to 25) performs the launching, measuring, and transmitting in response to a request from the OLT (10).

12. The method of one of the preceding claims, wherein the optical pulse comprises light having a wavelength used for data transmission in the passive optical network and wherein the steps of launching and measuring are carried out at a time where no ONU transmits data.

13. The method of one of the claims 1 through 11, wherein the optical pulse does not comprise light having a wavelength used for data transmission in the passive optical network and wherein the steps of launching and measuring are carried out at a time where one ONU transmits data.

14. An optical line terminal (OLT, 10) for use in passive optical networks in which the OLT is connected to a plurality of optical network units (ONUs, 21 to 25) via a plurality of optical splitters (31, 32), the OLT being adapted to receive data from the ONUs, the data comprising a distance information about a distance of the respective ONU to one or more of the optical splitters.

15. The OLT (10) of claim 14, being further adapted to detect one or more inflection points in a trace of measured reflected light, the trace being the distance information, and to process the positions of the one or more inflection points from each ONU (21 to 25) and grouping ONUs having a first inflection point mutually in common into one or more respective groups.

16. The OLT (10) of claim 14, being further adapted to retrieve an information about a position of the one or more inflection points within the trace, the information about the position being the distance information, and to process the positions of the one or more inflection points from each ONU (21 to 25) and grouping ONUs having a first inflection point mutually in common into one or more respective groups.

17. The OLT (10) of claim 15 or 16, being further adapted to subdivide the respective group or the respective groups of ONUs (21 to 25) into one or more subgroups wherein all ONUs of the subgroup have the first and a respective second inflection point mutually in common.

18. The OLT (10) of one of claims 14 to 17, being further adapted to detect one or more spikes in the trace of the measured reflected light.

**19.** The OLT (10) of claim 18, being further adapted to calibrate the position of the one or more inflection points of the plurality of ONUs (21 to 25) relatively to the position of a last spike among the one or more spikes.

**20.** An optical network unit (ONU, 21 to 25)) for use in passive optical networks in which an optical line terminal (OLT, 10) is connected to a plurality of ONUs via a plurality of optical splitters (31, 32), the ONU being adapted to launch an optical pulse into a passive optical network, to measure power of reflected light and to transmit measure data comprising a distance information about a distance of the ONU to one or more of the optical splitters to the OLT.

**21.** The ONU (21 to 25) of claim 20, being further adapted to detect one or more inflection points in a trace of the measured reflected light and to transmit an information about a position of the one or more inflection points within the trace to the OLT as the distance information.

**22.** The ONU (21 to 25) of claim 21, being further adapted to detect one or more spikes in the trace of the measured reflected light and to transmit an information about a position of the one or more spikes to the OLT (10) together with the distance information.

**23.** The ONU (21 to 25) of one of the claims 20 through 22, further being adapted to launch the optical pulse into the passive optical network, to measure the power of the reflected light and to transmit the measure data comprising a distance information about the distance of the ONU to one or more of the optical splitters (31, 32) to the OLT (10) in response to a request received from the OLT.

**Patentansprüche**

**1.** Verfahren zur automatisierten Netzwerktopologieerkennung in passiven optischen Netzwerken, in denen ein optischer Leitungsabschluss (OLT - Optical Line Terminal, 10) über mehrere optische Splitter mit mehreren optischen Netzwerkeinheiten (ONUs, 21 bis 25) verbunden ist, wobei das Verfahren für jede der ONUs Folgendes beinhaltet:

- Einkoppeln eines optischen Impulses in das passive optische Netzwerk;
- Messen der Leistung des reflektierten Lichts und
- Übertragung von Messdaten umfassend eine Entfernungsinformation über eine Entfernung der ONU von einem oder mehreren der optischen Splitter (31, 32) von dem OLT.

**2.** Verfahren nach Anspruch 1, weiterhin umfassend einen Schritt des Detektierens eines oder mehrerer Wendepunkte in einer Bahn des gemessenen reflektierten Lichts.

**3.** Verfahren nach Anspruch 2, wobei mindestens eine erste der ONUs (21 bis 25) den Schritt des Detektierens eines oder mehrerer Wendepunkte ausführt und eine Information über eine Position des einen oder der mehreren Wendepunkte innerhalb der Bahn zu dem OLT (10) als die Entfernungsinformationen überträgt.

**4.** Verfahren nach den Ansprüchen 2 oder 3, wobei mindestens eine zweite der ONUs (21 bis 25) die Bahn als die Entfernungsinformationen überträgt und wobei der OLT (10) den Schritt des Detektierens des einen oder der mehreren Wendepunkte und des Bestimmens der Position des einen oder der mehreren Wendepunkte innerhalb der Bahn ausführt.

**5.** Verfahren nach einem der Ansprüche 3 oder 4, weiterhin mit der Verarbeitung der Positionen der einen oder mehreren Wendepunkte von jeder ONU (21 bis 25) und gegenseitiges gemeinsames Gruppieren von ONUs mit einem ersten Wendepunkt zu einer oder mehreren jeweiligen Gruppen.

**6.** Verfahren nach Anspruch 5, weiterhin mit dem Unterteilen der jeweiligen Gruppe oder der jeweiligen Gruppen von ONUs (21 bis 25) in eine oder mehrere erste Untergruppen, wobei alle ONUs der Untergruppe den ersten und einen jeweiligen zweiten Wendepunkt gegenseitig gemeinsam haben.

**7.** Verfahren nach einem der Ansprüche 5 oder 6, weiterhin mit dem Bestimmen eines oder mehrerer jeweiliger Einfügedämpfungen für jeden des einen oder der mehreren Wendepunkte und Unterteilen der einen oder mehreren jeweiligen Gruppen in eine oder mehrere zweite Untergruppen, die jeweils gegenseitig eine der einen oder mehreren Einfügedämpfungen gemeinsam haben.

8. Verfahren nach einem der Ansprüche 2 bis 7, weiterhin mit dem Detektieren einer oder mehrerer Spitzen in der Bahn des gemessenen reflektierten Lichts.

9. Verfahren nach Anspruch 8, wobei die erste der ONUs (21 bis 25) das Detektieren der einen oder mehreren Spitzen ausführt und eine Information über eine Position der einen oder mehreren Spitzen zusammen mit den Entfernungsinformationen zu dem OLT (10) überträgt.

10. Verfahren nach einem der Ansprüche 8 oder 9, weiterhin mit dem Kalibrieren der Position des einen oder der mehreren Wendepunkte der mehreren ONUs (21 bis 25) relativ zu der Position einer letzten Spitze unter der einen oder den mehreren Spitzen an dem OLT (10).

11. Verfahren nach einem der vorhergehenden Ansprüche, wobei jede der ONUs (21 bis 25) das Einkoppeln, Messen und Übertragen als Reaktion auf eine Anforderung von dem OLT (10) durchführt.

12. Verfahren nach einem der vorhergehenden Ansprüche, wobei der optische Impuls Licht mit einer Wellenlänge umfasst, die für die Datenübertragung in dem passiven optischen Netzwerk verwendet wird, und wobei die Schritt des Einkoppelns und Messens zu einer Zeit ausgeführt werden, wenn keine ONU Daten überträgt.

13. Verfahren nach einem der Ansprüche 1 bis 11, wobei der optische Impuls kein Licht mit einer Wellenlänge umfasst, das für die Datenübertragung im passiven optischen Netzwerk verwendet wird, und wobei die Schritte des Einkoppelns und Messens zu einer Zeit ausgeführt werden, wo eine ONU Daten überträgt.

14. Optischer Leitungsabschluss (OLT, 10) zur Verwendung in passiven optischen Netzwerken, in denen der OLT über mehrere optische Splitter (31, 32) mit mehreren optischen Netzwerkeinheiten (ONUs, 21 bis 25) verbunden ist, wobei der OLT ausgelegt ist zum Empfangen von Daten von den ONUs, wobei die Daten Entfernungsinformationen über eine Entfernung der jeweiligen ONU von einem oder mehreren der optischen Splitter umfasst.

15. OLT (10) nach Anspruch 14, der weiterhin ausgelegt ist zum Detektieren eines oder mehrerer Wendepunkte in einer Bahn von gemessenem reflektiertem Licht, wobei die Bahn die Entfernungsinformation ist, und zum Verarbeiten der Positionen der einen oder mehreren Wendepunkte von jeder ONU (21 bis 25) und gegenseitiges gemeinsames Gruppieren von ONUs mit einem ersten Wendepunkt zu einer oder mehreren jeweiligen Gruppen.

16. OLT (10) nach Anspruch 14, der weiterhin ausgelegt ist zum Abrufen einer Information über eine Position des einen oder der mehreren Wendepunkte innerhalb der Bahn, wobei die Information über die Position die Abstandsinformation ist, und zum Verarbeiten der Positionen der einen oder mehreren Wendepunkte von jeder ONU (21 bis 25) und gegenseitiges gemeinsames Gruppieren von ONUs mit einem ersten Wendepunkt zu einer oder mehreren jeweiligen Gruppen.

17. OLT (10) nach Anspruch 15 oder 16, der weiterhin ausgelegt ist zum Unterteilen der jeweiligen Gruppe oder der jeweiligen Gruppen von ONUs (21 bis 25) in eine oder mehrere Untergruppen, wobei alle ONUs der Untergruppe den ersten und einen jeweiligen zweiten Wendepunkt gegenseitig gemeinsam haben.

18. OLT (10) nach einem der Ansprüche 14 bis 17, der weiterhin ausgelegt ist zum Detektieren einer oder mehrerer Spitzen in der Bahn des gemessenen reflektierten Lichts.

19. OLT (10) nach Anspruch 18, der weiterhin ausgelegt ist zum Kalibrieren der Position des einen oder der mehreren Wendepunkte der mehreren ONUs (21 bis 25) relativ zu der Position einer letzten Spitze unter der einen oder den mehreren Spitzen.

20. Optische Netzwerkeinheit (ONU, 21 bis 25) zur Verwendung in passiven optischen Netzwerken, in denen ein optischer Leitungsanschluss (OLT, 10) über mehrere optische Splitter (31, 32) mit mehreren ONUs verbunden ist, wobei die ONU ausgelegt ist zum Einkoppeln eines optischen Impulses in das passive optische Netzwerk; Messen der Leistung des reflektierten Lichts und Übertragen von Messdaten umfassend eine Entfernungs-information über eine Entfernung der ONU von einem oder mehreren der optischen Splitter von dem OLT.

21. ONU (21 bis 25) nach Anspruch 20, die weiterhin ausgelegt ist zum Detektieren eines oder mehrerer Wendepunkte in einer Bahn des gemessenen reflektierten Lichts und zum Übertragen einer Information über eine Position des einen oder der mehreren Wendepunkte innerhalb der Bahn an den OLT als die Entfernungsinformation.

**22.** ONU (21 bis 25) nach Anspruch 21, die weiterhin ausgelegt ist zum Detektieren einer oder mehrerer Spitzen in der Bahn des gemessenen reflektierten Lichts und zum Übertragen einer Information über eine Position der einen oder mehreren Spitzen zusammen mit der Entfernungsinformation an den OLT (10).

**23.** ONU (21 bis 25) nach einem der Ansprüche 20 bis 22, die weiterhin ausgelegt ist zum Einkoppeln des optischen Impulses in das passive optische Netzwerk, Messen der Leistung des reflektierten Lichts und Übertragen der gemessenen Daten umfassend eine Entfernungsinformation über die Entfernung der ONU von einem oder mehreren der optischen Splitter (31, 32) zu dem OLT (10) als Reaktion auf eine von dem OLT empfangene Anforderung.

**Revendications**

**1.** Un procédé de découverte automatisée de topologie de réseau dans des réseaux optiques passifs dans lesquels un terminal de ligne optique (OLT, 10) est raccordé à une pluralité d'unités de réseau optique (ONU, 21 à 25) par l'intermédiaire d'une pluralité de diviseurs optiques, le procédé comprenant pour chacune des ONU :

- le lancement d'une impulsion optique dans le réseau optique passif,
- la mesure d'une puissance de lumière réfléchie, et
- la transmission de données de mesure comprenant une information de distance relative à une distance de l'ONU à un ou plusieurs des diviseurs optiques (31, 32) à l'OLT.

**2.** Le procédé selon la revendication 1, comprenant en outre une étape de détection d'un ou plusieurs points d'inflexion dans un tracé de la lumière réfléchie mesurée.

**3.** Le procédé selon la revendication 2, dans lequel au moins une première des ONU (21 à 25) exécute l'étape de détection d'un ou de plusieurs points d'inflexion et transmet une information relative à une position des un ou plusieurs points d'inflexion à l'intérieur du tracé à l'OLT (10) en tant qu'information de distance.

**4.** Le procédé selon les revendications 2 ou 3, dans lequel au moins une deuxième des ONU (21 à 25) transmet le tracé en tant qu'information de distance et dans lequel l'OLT (10) exécute l'étape de détection des un ou plusieurs points d'inflexion et de détermination de la position des un ou plusieurs points d'inflexion à l'intérieur du tracé.

**5.** Le procédé selon l'une quelconque des revendications 3 ou 4, comprenant en outre le traitement des positions des un ou plusieurs points d'inflexion provenant de chaque ONU (21 à 25) et le groupement des ONU possédant un premier point d'inflexion mutuellement en commun en un ou plusieurs groupes respectifs.

**6.** Le procédé selon la revendication 5, comprenant en outre la subdivision du groupe respectif ou des groupes respectifs d'ONU (21 à 25) en un ou plusieurs premiers sous-groupes, toutes les ONU du sous-groupe possédant mutuellement en commun le premier et un deuxième point d'inflexion respectif.

**7.** Le procédé selon l'une quelconque des revendications 5 ou 6, comprenant en outre la détermination d'une ou de plusieurs pertes d'insertion respectives pour chacun des un ou plusieurs points d'inflexion et la subdivision des un ou plusieurs groupes respectifs en un ou plusieurs deuxièmes sous-groupes, chacun d'eux possédant mutuellement en commun une des une ou plusieurs pertes d'insertion.

**8.** Le procédé selon l'une quelconque des revendications 2 à 7, comprenant en outre la détection d'un ou de plusieurs pics dans le tracé de la lumière réfléchie mesurée.

**9.** Le procédé selon la revendication 8, dans lequel la première des ONU (21 à 25) exécute la détection des un ou plusieurs pics et transmet une information relative à une position des un ou plusieurs pics à l'OLT (10) conjointement avec l'information de distance.

**10.** Le procédé selon l'une quelconque des revendications 8 ou 9, comprenant en outre, au niveau de l'OLT (10), le calibrage de la position des un ou plusieurs points d'inflexion de la pluralité d'ONU (21 à 25) par rapport à la position d'un dernier pic parmi les un ou plusieurs pics.

**11.** Le procédé selon l'une quelconque des revendications précédentes, dans lequel chacune des ONU (21 à 25) exécute les opérations de lancement, de mesure et de transmission en réponse à une demande provenant de l'OLT (10).

**12.** Le procédé selon l'une quelconque des revendications précédentes, dans lequel l'impulsion optique comprend une lumière possédant une longueur d'onde utilisée pour une transmission de données dans le réseau optique passif et dans lequel les étapes de lancement et de mesure sont exécutées à un instant où aucune ONU ne transmet de données.

**13.** Le procédé selon l'une quelconque des revendications 1 à 11, dans lequel l'impulsion optique ne comprend pas de lumière possédant une longueur d'onde utilisée pour une transmission de données dans le réseau optique passif et dans lequel les étapes de lancement et de mesure sont exécutées à un instant où une ONU transmet des données.

**14.** Un terminal de ligne optique (OLT, 10) destiné à une utilisation dans des réseaux optiques passifs dans lesquels l'OLT est raccordée à une pluralité d'unités de réseau optique (ONU, 21 à 25) par l'intermédiaire d'une pluralité de diviseurs optiques (31, 32), l'OLT étant adaptée de façon à recevoir des données provenant des ONU, les données comprenant une information de distance relative à une distance de l'ONU respective à un ou plusieurs des diviseurs optiques.

**15.** L'OLT (10) selon la revendication 14, qui est adaptée en outre de façon à détecter un ou plusieurs points d'inflexion dans un tracé de lumière réfléchie mesurée, le tracé étant l'information de distance, et de façon à traiter les positions des un ou plusieurs points d'inflexion provenant de chaque ONU (21 à 25), et le groupement des ONU possédant un premier point d'inflexion mutuellement en commun en un ou plusieurs groupes respectifs.

**16.** L'OLT (10) selon la revendication 14, qui est adaptée en outre de façon à récupérer une information relative à une position des un ou plusieurs points d'inflexion à l'intérieur du tracé, l'information relative à la position étant l'information de distance, et de façon à traiter les positions des un ou plusieurs points d'inflexion provenant de chaque ONU (21 à 25), et le groupement des ONU possédant un premier point d'inflexion mutuellement en commun en un ou plusieurs groupes respectifs.

**17.** L'OLT (10) selon la revendication 15 ou 16, qui est adaptée en outre de façon à subdiviser le groupe respectif ou les groupes respectifs d'ONU (21 à 25) en un ou plusieurs sous-groupes, toutes les ONU du sous-groupe possédant mutuellement en commun le premier et un deuxième point d'inflexion respectif.

**18.** L'OLT (10) selon l'une quelconque des revendications 14 à 17, qui est adaptée en outre de façon à détecter un ou plusieurs pics dans le tracé de la lumière réfléchie mesurée.

**19.** L'OLT (10) selon la revendication 18, qui est adaptée en outre de façon à calibrer la position des un ou plusieurs points d'inflexion de la pluralité d'ONU (21 à 25) par rapport à la position d'un dernier pic parmi les un ou plusieurs pics.

**20.** Une unité de réseau optique (ONU, 21 à 25) destinée à une utilisation dans des réseaux optiques passifs dans lesquels un terminal de ligne optique (OLT, 10) est raccordé à une pluralité d'ONU par l'intermédiaire d'une pluralité de diviseurs optiques (31, 32), l'ONU étant adaptée de façon à lancer une impulsion optique dans un réseau optique passif, à mesurer une puissance de lumière réfléchie et à transmettre des données de mesure comprenant une information de distance relative à une distance de l'ONU à un ou plusieurs des diviseurs optiques à l'OLT.

**21.** L'ONU (21 à 25) selon la revendication 20, qui est adaptée en outre de façon à détecter un ou plusieurs points d'inflexion dans un tracé de la lumière réfléchie mesurée et à transmettre une information relative à une position des un ou plusieurs points d'inflexion à l'intérieur du tracé à l'OLT en tant qu'information de distance.

**22.** L'ONU (21 à 25) selon la revendication 21, qui est adaptée en outre de façon à détecter un ou plusieurs pics dans le tracé de la lumière réfléchie mesurée et à transmettre une information relative à une position des un ou plusieurs pics à l'OLT (10) conjointement avec l'information de distance.

**23.** L'ONU (21 à 25) selon l'une quelconque des revendications 20 à 22, qui est adaptée en outre de façon à lancer l'impulsion optique dans le réseau optique passif, à mesurer la puissance de la lumière réfléchie et à transmettre les données de mesure comprenant une information de distance relative à la distance de l'ONU à un ou plusieurs des diviseurs optiques (31, 32) à l'OLT (10) en réponse à une demande reçue de l'OLT.

## FIG 1

OLT ~10

31

32

ONU 1 ~21

ONU 2 ~22

ONU 3 ~23

ONU 4 ~24

ONU 5 ~25

Up to 20 km

ONU→ OLT - Upstream direction

OLT→ ONU - Downstream direction

## FIG 2

The OTDR trace is sent to the ONU

OLT ~10

31

32

ONU 1 ~21

ONU 2 ~22

ONU 3 ~23

ONU 4 ~24

ONU 5 ~25

# FIG 3

Reflection points

# FIG 4

# FIG 5

Network management requests topology discovery — 100

OLZ sequentially requests each ONU to perform OTDR — 110

120 — Did all ONUs perform and upload the OTDR trace? — No → Wait until time out. Then retry

Yes

140 — Locate first splitter position in every OTDR trace

150 — Compare first splitter position and calibrate OTDR traces

160 — Is there a next splitter in the OTDR trace? — No → 165 ONU is connected directly to last splitter → Build topology for this ONU — 160

Yes

170 — Locate next splitter position

180 — Is the splitter position the same as in other OTDR traces? — No → 185 ONUs are connected to different splitters

Yes

ONUs with the same splitter position are connected to the same splitter — 190

## FIG 6

Standard ONU circuitry

200

210

220

230

250  270  290

260  280

OTDR

TV  Rx

Tx

ONU

240  ONU control

## FIG 7

Electronic OTDR control unit

300

310

350  370  390  330

360  380

Standard ONU circuitry

TV  Rx

Tx  OTDR front-end

ONU

340  ONU control

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2006007426 A1, WELLER WHITNEY T [US]

**Non-patent literature cited in the description**

- **B. DE MULDER ; W. CHEN ; J. BAUWELINCK ; J. VANDEWEGE ; X. Z. QIU.** Nonintrusive Fiber Monitoring of TDM Optical Networks. *Journal of Lightwave Technology,* 2007, vol. 25 (1